# EUROPÄISCHE PATENTSCHRIFT

(11) **EP 4 140 006 B1**
(45) Veröffentlichungstag und Bekanntmachung des Hinweises auf die Patenterteilung: **02.08.2023**
(21) Anmeldenummer: 21731420.2
(22) Anmeldetag: 02.06.2021
(51) Int. Cl.: H02J 3/28, H02J 3/38, H02J 15/00

(54) **VERFAHREN ZUR BEDARFSABHÄNGIGEN REGELUNG EINER ELEKTROCHEMISCHEN ANLAGE**
METHOD FOR ON-DEMAND CLOSED-LOOP CONTROL OF AN ELECTROCHEMICAL PLANT
PROCÉDÉ DE COMMANDE EN BOUCLE FERMÉE À LA DEMANDE D'UNE INSTALLATION ÉLECTROCHIMIQUE

(30) Priorität: 15.06.2020 DE 102020115711
(43) Veröffentlichungstag der Anmeldung: 01.03.2023
(73) Patentinhaber: thyssenkrupp nucera AG & Co. KGaA, 44141 Dortmund (DE)
(72) Erfinder: TSIKLIOS, Christos, 45147 Essen (DE); BÜRKIN, Cornelia, 44137 Dortmund (DE); POLCYN, Gregor Damian, 44225 Dortmund (DE); LÜKE, Lukas, 44141 Dortmund (DE); TOROS, Peter, 45326 Essen (DE); FEDERICO, Fulvio, 29100 Piacenza (IT)
(74) Vertreter: thyssenkrupp Intellectual Property GmbH
(86) Internationale Anmeldenummer: PCT/EP2021/064727
(87) Internationale Veröffentlichungsnummer: WO 2021/254774

(56) Entgegenhaltungen:
- US-A1- 2018 291 516
- US-A1- 2019 127 867

## Beschreibung

Die Erfindung betrifft ein Verfahren zur bedarfsabhängigen Regelung einer elektrochemischen Anlage, welche Anlage Module und eine Steuereinheit umfasst, wobei jedes Modul durch die Steuereinheit individuell angesteuert und mit einem modulspezifischen elektrischen Betriebsstrom versorgt wird, um mittels der Module jeweils einen Produktstrom zu erzeugen, wobei die Produktströme der einzelnen, bezüglich ihrer Produktströme parallel geschalteten Module zu einem Gesamtproduktstrom der Anlage zusammengeführt werden.

Der Energiebedarf chemischer Anlagen hat einen bedeutsamen Anteil am Energiebedarf der gesamten Industrie, so dass sowohl aus ökonomischen als auch aus ökologischen Gründen ein ausgeprägtes Interesse besteht, den Energiebedarf chemischer Anlagen zu senken.

Als Beispiel für besonders energieintensive Anlagen sei auf Elektrolyse-Anlagen, beispielsweise Wasser-Elektrolyse- oder Chlor-Alkali-Elektrolyse-Anlagen verwiesen. Kernstück solcher Anlagen sind in Serie geschaltete Zellen, die Module - auch Stacks genannt - bilden. Ein solcher Aufbau liegt auch bei der Brennstoffzellen- oder der Batterie-Technologie vor. In typischerweise groß dimensionierten chemischen Anlagen wird eine Vielzahl solcher Module parallel betrieben, um einen gewünschten Gesamtproduktstrom, beispielsweise einen Stoff- oder elektrischer Strom, zu erzeugen, also die elektrochemische Anlage bedarfsabhängig zu regeln. Wenn der Gesamtproduktstrom der Anlage nur durch erneuerbare Energien gedeckt werden soll, so ist es erforderlich, dass die Anlage hinreichend flexibel ist. Durch ein hohes Maß an Flexibilität der Anlage kann sichergestellt werden, dass die stark variierende, durch erneuerbare Energien bereitgestellte Leistung möglichst vollumfänglich und schnell in einen Gesamtproduktstrom umgesetzt werden kann. Als positiver Nebeneffekt können durch derartig flexible Anlagen auch durch starken Wind oder enorme Sonneneinstrahlung bedingte Leistungsspitzen effektiv und auf sinnvolle Art und Weise zur Aufrechterhaltung der Netzstabilität gepuffert werden. Insofern besteht an solche Anlagen sowohl die Anforderung, besonders energieeffizient zu sein als auch möglichst flexibel reagieren zu können.

Aus EP 2 350 352 B1 ist ein Stromabgabesystem zur elektrolytischen Herstellung von Wasserstoff aus Windkraft bekannt, wobei zudem ein Verfahren zum Steuern der Verteilung von elektrischer Energie von einem Windpark an eine Vielzahl von Elektrolyse-Modulen zur Wasserstofferzeugung offenbart wird. Dabei ist die Steuerung darauf ausgerichtet, den Auslastungsgrad der Module möglichst auf dem Level der durch den Windpark bereitgestellten elektrischen Energie -was besonders bei stark schwankender Windstärke problematisch ist - zu halten; mithin die regenerative Energie möglichst zum vollen Anteil für die Wasserstofferzeugung zu verwenden. Dazu wird auf Basis des durch den Windpark erzeugten verfügbaren Gleichstroms der Betriebsstrom des Moduls gewählt, um möglichst den vollen Anteil an Windenergie in die Wasserstoffproduktion investieren zu können.

Nachteilig bei solchen Anlagen ist, dass sie weit entfernt von ihrem optimalen Energieeffizienz-Betriebspunkt betrieben werden, so dass solche vorbekannten Anlagen eine erhöhte Gesamtleistungsaufnahme aufweisen, was weder ökonomisch noch ökologisch sinnvoll ist. Insbesondere werden bei aus dem Stand der Technik bekannten Anlagen beziehungsweise der Regelung solcher Anlagen die individuellen Alterserscheinungen und Betriebsmodi der einzelnen Module ignoriert, die sich in erheblicher Weise auf die Effizienz der Gesamtanlage und damit deren Gesamtleistungsaufnahme auswirkt.

US 2019/0127867 A1 und US 2018/0291516 A1 beschreiben jeweils ein elektrolytisches System umfassend einen Leistungsgenerator, der eine erste Gleichstromleistung abgibt, eine Vielzahl von Wandlern, von denen jeder die erste Gleichstromleistung in eine zweite Gleichstromleistung gemäß einem Soll-Tastverhältnis umwandelt und Spannungsinformationen und Strominformationen der zweiten Gleichstromleistung abgibt, eine Vielzahl von Elektrolyseuren, eine Steuerschaltung und eine Auswahlschaltung. Jeder der Elektrolyseure empfängt eine zweite Gleichstromleistung die von dem jeweils zugeordneten Wandler abgegeben wird. Die Steuerschaltung gibt auf der Grundlage eines Spannungswerts und eines Stromwerts der ersten Gleichstromleistung Steuerinformationen aus, durch die sich die erste Gleichstromleistung einer Maximalleistung annähert. Die Auswahlschaltung gibt auf der Grundlage der Steuerinformationen und der Spannungs- und Strominformationen das Soll-Tastverhältnis und ein Auswahlsignal darüber aus, ob jeder der mehreren Elektrolyseure und jeder der mehreren Wandler ausgewählt werden soll.

Insofern liegt der Erfindung die Aufgabe zugrunde, ein Verfahren zur bedarfsabhängigen Regelung einer elektrochemischen Anlage vorzuschlagen, welches sich durch eine möglichst geringe Gesamtleistungsaufnahme, einen möglichst ökonomischen und ökologischen Betrieb sowie eine hohe Flexibilität zur Deckung eines stark schwankenden Gesamtproduktstrombedarfs auszeichnet.

Gelöst wird diese Aufgabe durch das eingangs genannte gattungsgemäße Verfahren, welches sich dadurch auszeichnet, dass bei Vorliegen einer Startbedingung die folgenden Schritte durch die Steuereinheit durchgeführt werden:
- Erfassen eines aktuellen Gesamtproduktstrombedarfs
- Erfassen der aktuellen von dem Verhältnis aus jeweiligem Betriebsstrom und Produktstrom abhängigen Effizienz der Module der elektrochemischen Anlage,
- Ermitteln der einsatzbereiten Module,
- Ermitteln von modulspezifischen Soll-Betriebsströmen für die einsatzbereiten Module zur Deckung des aktuellen Gesamtproduktstrombedarfs aus einer Spanne zulässiger modulspezifischer Soll-Betriebsströme in Abhängigkeit von der Effizienz der Module und des aktuellen Gesamtproduktstrombedarfs,
- Einstellen der Betriebsströme der einsatzbereiten Module auf die ermittelten modulspezifischen Soll-Betriebsströme.

Die im Rahmen dieser Erfindung diskutierten Module zeichnen sich dadurch aus, dass sie hinsichtlich ihrer Effizienz charakterisierbar sind. Solche Module können zum Beispiel Elektrolyse-Module sein, deren Strom-Spannungskennlinie eine ganze Schar verschiedener Betriebspunkte des Moduls abbildet. Zudem spiegelt sich auch der Alterungsprozess der Module in der Strom-Spannungskennlinie wieder, da ältere und somit weniger energieeffiziente Module eine höhere Spannung benötigen, um denselben Strom beziehungsweise Produktstrom zu liefern.

Wesentlich bei dem erfindungsgemäßen Verfahren ist, dass die bedarfsabhängig zu regelnde chemische Anlage neben den einzelnen Modulen eine Steuereinheit umfasst, welche dazu ausgelegt ist die Module individuell anzusteuern. Diese Ansteuerung besteht insbesondere darin, dass die Steuereinheit die Module jeweils mit einem modulspezifischen elektrischen Betriebsstrom versorgt. Die Anlage ist so aufgebaut, dass die Produktströme der individuellen Module in der Anlage zu einem Gesamtproduktstrom zusammengeführt werden.

Kennzeichnend für das erfindungsgemäße Verfahren ist, dass bei Vorliegen einer Startbedingung die folgenden Schritte durch die Steuereinheit durchgeführt werden:
Es wird der aktuelle Gesamtproduktstrombedarf erfasst. Dieses ist insofern erforderlich, als dass der Gesamtproduktstrombedarf durch die chemische Anlage zu decken ist.

Zudem wird die Effizienz jedes Moduls erfasst. Dies stellt einen essentiellen Schritt des erfindungsgemäßen Verfahrens dar, um die chemische Anlage möglichst energieeffizient regeln zu können. Dabei hängt die modulspezifische Effizienz von dem Verhältnis aus dem modulspezifischen Betriebsstrom und dem jeweiligen erzeugten Produktstrom des Moduls ab. Die Effizienz der Module ist nicht konstant, sondern hängt beispielsweise von der Alterung des Moduls oder auch von der Betriebstemperatur ab.

Des Weiteren wird im Rahmen des erfindungsgemäßen Verfahrens erfasst, welche der Module der Anlage zur Verfügung stehen. Insbesondere können auch nur die einsatzbereiten Module berücksichtigt werden: Defekte oder gewartete Module können nicht zur Deckung des Gesamtproduktstrombedarfs beitragen und bleiben somit unbeachtet, so dass die ausfallenden Beiträge solcher Module - wenn möglich - durch die einsatzbereiten Module kompensiert werden müssen. Nicht einsatzbereiten Modulen wird der modulspezifische Soll-Betriebsstrom von im Wesentlichen Null zugewiesen, so dass solche Module auf diese Art und Weise ausgeschaltet werden. Dabei kann erfindungsgemäß vorgesehen sein, dass durch die Ermittlung der Module nicht nur die Module als solche, sondern eine Gesamtproduktstromkapazität, ermittelbar wird. Eine solche Information ist zur Regelung der Anlage, beispielsweise zum Puffern von einem Überangebot von Energie, insbesondere regenerativ erzeugter Energie, wertvoll. Dabei kann im Rahmen einer bevorzugten Weiterbildung vorgesehen sein, dass die einzelnen Module über eine gewisse Zeitspanne mit einer Überlast, beispielsweise 110%, betrieben werden, um einen besonders hohen Beitrag zur Netzstabilität leisten zu können.

In einem weiteren Schritt des erfindungsgemäßen Verfahrens werden die modulspezifischen Soll-Betriebsströme ermittelt, um damit den Gesamtproduktstrombedarf zu decken. Diese Ermittlung erfolgt modulspezifisch - also ist bei diesem Verfahren vorgesehen, dass jedes Modul einen individuellen Soll-Betriebsstrom zugewiesen bekommt. Die Soll-Betriebsströme werden aus einer Spanne zulässiger modulspezifischer Soll-Betriebsströme ausgewählt. Die untere Grenze einer solchen Spanne ist beispielsweise durch den Soll-Betriebsstrom gegeben, der erforderlich ist, um das Modul überhaupt in Betrieb zu setzen. Eine obere Grenze des Soll-Betriebsstroms ist zum Beispiel durch einen Strom gegeben, bei dem das Modul an der Grenze seiner maximalen Auslastung arbeitet, ohne dass es übermäßigen Schaden - also über die normale Alterung hinausgehend - nimmt.

Jedoch erfolgt die Ermittlung der modulspezifischen Soll-Betriebsströme nicht lediglich danach, dass die zulässige Spanne der Soll-Betriebsströme eingehalten und der Gesamtproduktstrombedarf gedeckt wird. Vielmehr wird die Ermittlung der modulspezifischen Soll-Betriebsströme in Abhängigkeit von der Effizienz der Module und des aktuellen Gesamtproduktstrombedarfs vorgenommen. Während die Abhängigkeit der Soll-Betriebsströme von dem Gesamtproduktstrombedarf schlichtweg darin begründet ist, dass eine direkte Abhängigkeit zwischen der Beaufschlagung der Module mit einem gewissen Soll-Betriebsstrom und dem erzeugten Gesamtproduktstrom besteht - daher die Soll-Betriebsströme immer mit Blick auf den Gesamtproduktstrombedarf zu ermitteln sind - stellt die Abhängigkeit der Soll-Betriebsströme der Module von der Effizienz der Module eine nichttriviale Abhängigkeit dar. Diese Berücksichtigung der Effizienz der Module in der Ermittlung der Soll-Betriebsströme ermöglicht es auf besonders vorteilhafte Art und Weise, die Anlage in einem energieeffizienten Modus zu betreiben.

Nachdem die Betriebsströme der Module auf die ermittelten modulspezifischen Soll-Betriebsströme zur energieeffizienten Deckung des Gesamtproduktstrombedarfs eingestellt worden sind, kann das erfindungsgemäße Verfahren wieder von vorne beginnen, beispielsweise indem die Steuereinheit die Anlage auf das Vorliegen einer neuen Startbedingung überwacht.

Durch das erfindungsgemäße Verfahren wird somit nicht nur ein energieeffizienter Betrieb ermöglicht, sondern wird durch die bedarfsabhängige Regelung der elektrochemischen Anlage zur Deckung eines Gesamtproduktstrombedarfs auch ein hoher Beitrag zur Netzstabilität geleistet, da Spannungs- beziehungsweise Stromspitzen in Folge eines Überangebotes von Energie, insbesondere regenerativ gewonnener Energie, gepuffert werden können, indem der durch das erfindungsgemäße Verfahren erzeugte Gesamtproduktstrom beziehungsweise der Gesamtproduktstrombedarf so gewählt wird, dass ein bestimmtes Maß an elektrischer Energie, insbesondere zu puffernder Energie, hierfür verwendet wird.

In einer Weiterbildung dieses erfindungsgemäßen Verfahrens werden zum Ermitteln der modulspezifischen Soll-Betriebsströme die jeweiligen Module nach deren aktueller Effizienz sortiert und geordnet angehoben beziehungsweise abgesenkt, bis der aktuelle Gesamtproduktstrombedarf gedeckt wird. So werden bei einem steigenden beziehungsweise fallenden Gesamtproduktstrombedarf die effizientesten beziehungsweise ineffizientesten Module mit einem höheren beziehungsweise niedrigeren Soll-Betriebsstrom beaufschlagt. Hierdurch wird sichergestellt, dass solche Module, die sich durch eine besonders hohe aktuelle Effizienz auszeichnen, mit einem hohen Auslastungsgrad beziehungsweise Soll-Betriebsstrom und ineffiziente Module mit einem niedrigen Auslastungsgrad beziehungsweise Soll-Betriebsstrom betrieben werden.

Die Ordnung beziehungsweise Sortierung der Module nach ihrer Effizienz zur geordneten Anhebung oder Absenkung der modulspezifischen Soll-Betriebsströme kann dabei sehr zeitaufwendig sein, so dass die Flexibilität bezüglich der Deckung einer stark schwankenden Gesamtproduktstromnachfrage nicht mehr gewährleistet werden kann. Diesem Problem kann durch eine bevorzugte erfindungsgemäße Weiterbildung begegnet werden, indem der Zeitaufwand für die Sortierung von n Modulen durch die Verwendung eines Algorithmus, der mit n*log(n) skaliert, minimiert wird. Als Sortieralgorithmus kommt zum Beispiel der sogenannte Quicksort-Algorithmus in Frage, der wie vorstehend genannt skaliert und das erfindungsgemäße Verfahren auch bei der Anwendung auf Anlagen mit einer Vielzahl von Modulen hinreichend schnell auf eine Änderung der Gesamtproduktstromnachfrage reagieren lässt.

Erfindungsgemäß werden zum Ermitteln der modulspezifischen Soll-Betriebsströme (Im) die jeweiligen Module (M) nach einem modulspezifischen Lebenszyklus-Parameter sortiert und geordnet angehoben beziehungsweise abgesenkt bis der aktuelle Gesamtproduktstrombedarf (B) gedeckt wird. Dabei wird der Lebenszyklus-Parameter aus der aktuellen Effizienz der Module und einem Instandhaltungskosten der elektrochemischen Anlage berücksichtigenden Korrekturterm berechnet. Durch die Berücksichtigung der Instandhaltungskosten wird der Betrieb der Anlage im Hinblick auf die Gesamtkosten des Betriebs (Total Cost of Ownership) verbessert. Der Korrekturterm erzeugt eine Abweichung von dem momentan effizientesten Betriebspunkt der Anlage, der eine ungleichmäßige Alterung der Module im Hinblick auf deren Effizienz ermöglicht. Die Wartungskosten der Anlage sind von der Betriebsweise der Anlage abhängig. Beispielsweise können die Wartungskosten reduziert werden, indem die Anlage nur in vorgegebenen Wartungsintervallen überprüft werden muss und Stillstands- bzw. Ausfallzeiten vermieden werden. Im Hinblick auf reduzierte Instandhaltungskosten ist es daher vorteilhaft, wenn jeweils ein Teil der Module, beispielsweise 10% bis 25% der Module, nach Ablauf eines Wartungsintervalls rollierend und bei laufendem Betrieb der Anlage gewartet bzw. ausgetauscht werden. Hierfür ist es vorteilhaft, wenn die auszutauschenden Module eine höhere Alterung und somit eine niedrigere Effizienz aufweisen, als die übrigen Module der Anlage. Ferner ist es vorteilhaft, nach der Wartung oder dem Austausch sicherzustellen, dass im Teillastbetrieb nicht nur die zuletzt gewarteten Module aufgrund ihrer höheren Effizienz verwendet werden. Diese Vorteile werden durch einen die Instandhaltungskosten der Anlage berücksichtigenden Korrekturterm erreicht.

Vorzugsweise wird der Korrekturterm abhängig von einer während der bisherigen Lebenszeit durch das jeweilige Modul geflossenen Gesamtladungsmenge und/oder abhängig vom Alter des jeweiligen Moduls und/oder abhängig von einer Position des Moduls in der elektrochemischen Anlage bestimmt. In den elektrochemischen Zellen der Module laufen unterschiedliche Alterungsprozesse ab, deren Fortschreiten zu einem bestimmten Zeitpunkt eine Wartung oder einen Austausch erforderlich macht. Eine Gruppe von Alterungserscheinungen ist in erster Linie abhängig von der durch das Modul geflossenen Gesamtladungsmenge. Hierzu zählen beispielsweise die abnehmende Ionen-Leitfähigkeit von Separatoren und die Qualität von Elektrodenbeschichtungen. Andere, beispielsweise korrosive Alterungserscheinungen sind in erster Linie vom Alter des Moduls abhängig. Durch Berücksichtigung der Position des Moduls in der elektrochemischen Anlage kann ferner Einfluss darauf genommen werden, dass die zu wartenden bzw. auszutauschenden Module räumlich möglichst konzentriert, beispielsweise in einem Block oder Sektor der Anlage liegen. Auf diese Weise können die Wartungskosten weiter gesenkt werden.

Bevorzugt erfolgt das Ermitteln der modulspezifischen Soll-Betriebsströme für die einsatzbereiten Module zur Deckung des Gesamtproduktstrombedarfs iterativ unter Vorausberechnung der für jedes einzelne Modul erreichbaren Effizienz bei einer angenommenen schrittweisen Veränderung des jeweiligen modulspezifischen Betriebsstroms. Iterative Verfahren sind gut geeignet komplexer Anlagen unter wechselnden Betriebsbedingungen zu optimieren gut geeignet, da sie ausgehend von einem bestehenden Betriebszustand eine schnelle und effektive Anpassung an veränderte Bedingungen erlauben.

Besonders bevorzugt beruht die Iteration auf einem Greedy-Algorithmus, d.h. einem Algorithmus der schrittweise denjenigen Folgezustand auswählt, der zum Zeitpunkt der Wahl die beste Veränderung in der Effizienz der Anlage verspricht.

Weiterhin bevorzugt erfolgt die Iteration mit einer adaptiven Schrittweite, die abhängig von einer bestehenden Abweichung des Gesamtproduktstroms von dem Gesamtproduktstrombedarf gewählt wird. Dadurch kann der mit der Iteration erreichbare Endzustand im Hinblick auf ein theoretisches Optimum verbessert werden.

In einer bevorzugten Weiterbildung wird die Effizienz der Module beim Ermitteln der modulspezifischen Soll-Betriebsströme mit einem Gewichtungsfaktor gewichtet, der von dem Verhältnis des modulspezifischen Betriebsstroms und der Summe der modulspezifischen Betriebsströme aller Module abhängt. Hierdurch wird es möglich, die chemische Anlage noch näher an ihrem Energieeffizienzoptimum betreiben zu können, da die Auswirkung der Effizienzänderung des einzelnen Moduls auf die Gesamteffizienz berücksichtigt wird.

Im praktischen Betrieb der chemischen Anlage gemäß einer Weiterbildung des erfindungsgemäßen Verfahrens liegt der Fokus neben einer guten Energieeffizienz jedoch auch darauf, starke Schwankungen des Gesamtproduktstrombedarfs hinreichend schnell bedienen zu können; mithin hinreichend flexibel den Auslastungsgrad der Anlage an einen stark variierenden Bedarf anpassen zu können. Dieses wird im Rahmen einer Weiterbildung des erfindungsgemäßen Verfahrens erreicht, indem sämtliche Module durch die Steuereinheit einen zu einer Grundlast korrespondierenden Mindest-Betriebsstrom zugewiesen bekommen. Durch einen Mindestbetriebsstrom wird unter anderem sichergestellt, dass sämtliche Module, beispielsweise Module einer Elektrolyse-Anlage, auf einer Mindesttemperatur gehalten werden, die es ermöglicht, dass sämtliche Module eine gewisse Mindest-Effizienz aufweisen. Kalte Elektrolysemodule würden andernfalls aufgrund ihrer zu geringen Effizienz eventuell nicht durch die Steuereinheit in Betracht gezogen werden, so dass der Gesamtproduktstrombedarf nicht gedeckt werden kann.

In einer bevorzugten Ausgestaltung des erfindungsgemäßen Verfahrens ist die Steuereinheit eine Anlagenkontrolleinheit. Eine solche Anlagenkontrolleinheit ist allein aus Sicherheitsgründen ohnehin für nahezu alle chemischen Anlagen erforderlich, so dass zur Durchführung des erfindungsgemäßen Verfahrens keine zusätzliche Hardware zur Steuerung erforderlich ist. Neben den vorbeschriebenen Vorteilen hinsichtlich des energieeffizienten Betriebs der Anlage macht dies den Einsatz des erfindungsgemäßen Verfahren in einer Vielzahl von chemischen Analgen besonders attraktiv.

Die erfindungsgemäßen Schritte des Verfahrens werden erst bei Vorliegen einer Startbedingung ausgeführt. Eine solche Startbedingung kann darin bestehen, dass der aktuell erzeugte Produktstrom um ein vorgebbares Maß von dem Gesamtproduktstrombedarf abweicht. Durch eine solche Startbedingung wird sowohl eine schwankende Effizienz der Module, die zu einem variierenden Gesamtproduktstrom führen, als auch ein sich ändernder Gesamtproduktstrombedarf erfasst. Ebenfalls kommt als eine Startbedingung in Betracht, die In- oder Außerbetriebnahme einzelner Module zu verwenden. Wenn beispielsweise zu Wartungszwecken einzelne Module außer Betrieb genommen werden, stehen diese Module nicht mehr zur Deckung des Gesamtproduktstrombedarfs zur Verfügung. Durch das Vorsehen einer vorbeschriebenen Startbedingung, wird das erfindungsgemäße Verfahren eine Bewertung eines außer Betrieb genommen Moduls als nicht einsatzfähig vornehmen, so dass der Beitrag des außer Betrieb genommen Moduls durch ein anderes Modul übernommen wird. Analog verhält es sich für zusätzlich in Betrieb genommene Module, beispielweise wenn die Anlage mit neuen Modulen bestückt wird.

In einer weiteren Ausführungsform des erfindungsgemäßen Verfahrens wird als eine Startbedingung die Über- oder Unterschreitung der durch die Steuereinheit ermittelten Temperatur der Module um einen vorgebbaren Maximalbetrag verwendet. Hierdurch kann durch das erfindungsgemäße Verfahren vermieden werden, dass einzelne Module überhitzen, oder dass Module bei einer niedrigeren Temperatur als der gewünschten Betriebstemperatur betrieben werden und somit nicht die best-mögliche Effizienz vorweisen. Ebenfalls kann als besonders einfache Startbedingung der Ablauf einer vorgegebenen Zeitspanne vorgesehen sein.

In einer besonders bevorzugten Weiterbildung des erfindungsgemäßen Verfahrens ist die elektrochemische Anlage eine Wasser-Elektrolyse-Anlage. Da bei einer Wasser-Elektrolyse-Anlage der Energieeffizienz eine besonders große Rolle zukommt und die unterschiedlichen Module mitunter enorme Effizienzunterschiede und -schwankungen aufweisen können, kann das erfindungsgemäße Verfahren - angewendet auf eine Wasser-Elektrolyse-Anlage - seine Vorteile in besonders ausgeprägtem Maße zur Geltung bringen.

Im Rahmen einer weiteren Ausführungsform des erfindungsgemäßen Verfahrens ist die Effizienz der einzelnen Module anhand einer Strom-Spannungskennlinie ermittelbar. Dieses kann beispielsweise für Elektrolyse-Module oder aber auch Batterien der Fall sein. Je höher die Effizienz von solchen Elektrolyse- beziehungsweise Batteriemodulen ist, desto geringer ist die Betriebsspannung zu einem bestimmten Soll-Betriebsstrom. Eine Alterung der Module äußert sich zum Beispiel darin, dass die Strom-Spannungskennlinie sich hin zu größeren Spannungen entlang der Ordinate verschiebt.

In einer bevorzugten Weiterbildung des erfindungsgemäßen Verfahrens wird die Effizienz der einzelnen Module in der Steuereinheit zur Dokumentation der Modulalterung gespeichert. Dieses geht mit dem Vorteil einher, dass die Modulalterung kontinuierlich protokolliert wird und die Beschaffung neuer Module beziehungsweise eine Aufbereitung alter Module zeitnah veranlasst werden kann. Hierdurch können Ausfälle von Modulen sowie der ineffiziente Betrieb stark gealterter Module wirksam vermieden werden. Zudem erlaubt eine solche Speicherung auf besonders einfache Art und Weise, dass kalten und somit ineffizienten Modulen die letzte abgespeicherte Effizienz zugewiesen wird, so dass ein realistischerer Wert für die Effizienz der Module unter Berücksichtigung der Temperaturabhängigkeit der elektrochemischen Reaktion angenommen wird, als es der Fall wäre, wenn die Effizienz der kalten Module genutzt werden würde.

Bevorzugt werden die gemessenen Effizienzen in der Steuereinheit als Datenpunkte in ein modulspezifisches Modell zur Vorhersage der aktuellen Strom-Spannungskennlinie des jeweiligen Moduls hinzugefügt. Durch das Hinzufügen von Datenpunkte wird das Modell entsprechend der Alterung des Moduls aktualisiert. Ein Modell zur Vorhersage der aktuellen Strom-Spannungkennlinie erlaubt die Vorhersage und Berücksichtigung der Effizienz des jeweiligen Moduls in einem beliebigen Betriebspunkt.

In einer weiteren bevorzugten Ausführungsform des erfindungsgemäßen Verfahrens werden bestimmte Module für eine vorgebbare Zeit mit einem vorgebbaren Equilibrierungsbetriebsstrom zu Verbesserung der Effizienz der betriebsbereiten Module beaufschlagt, wobei diese Verbesserung der Effizienz bei dem Ermitteln der modulspezifischen Soll-Betriebsströme berücksichtigt wird. Durch einen solchen Equilibrierungsbetriebsstrom kann die individuelle Effizienz der Module genauer ermittelt werden, was die Genauigkeit des Verfahrens weiter verbessert.

Vorteilhafte Weiterbildungen ergeben sich aus den Unteransprüchen, der nachfolgenden Beschreibung sowie den Figuren.

Nachfolgend ist die Erfindung anhand von Ausführungsbeispielen unter Bezugnahme auf die beigefügten Figuren beschrieben. Es zeigen:
Fig. 1: Eine Darstellung der Verfahrensschritte des erfindungsgemäßen Verfahrens,
Fig. 2: eine Darstellung der Verfahrensschritte des erfindungsgemäßen Verfahrens gemäß einer bevorzugten Weiterbildung, bei der die Module nach deren aktueller Effizienz sortiert und geordnet angehoben beziehungsweise abgesenkt werden und
Fig.3: eine Darstellung der Verfahrensschritte des erfindungsgemäßen Verfahrens gemäß einer alternativen bevorzugten Weiterbildung, bei der der ermittelte modulspezifische Soll-Betriebsstrom durch Multiplikation mit einem Gewichtungsfaktor modifiziert werden und
Fig.4: eine schematische Darstellung des erfindungsgemäßen Verfahrens anhand einer Wasser-Elektrolyse-Anlage, welche eine Steuereinheit sowie eine Vielzahl parallel geschalteter Module umfasst, welche Module aus in Reihe geschalteten Elektrolyse-Zellen gebildet werden.

In den verschiedenen Figuren sind gleiche Teile stets mit den gleichen Bezugszeichen versehen und werden daher in der Regel auch jeweils nur einmal benannt beziehungsweise erwähnt.

Das erfindungsgemäße Verfahren zur bedarfsabhängigen Regelung einer elektrochemischen Anlage ist anwendbar auf solche Anlagen, die Module und eine Steuereinheit umfassen. Dabei wird jedes Modul durch die Steuereinheit individuell angesteuert und mit einem modulspezifischen elektrischen Betriebsstrom versorgt. Durch die Versorgung der Module mit einem elektrischen Betriebsstrom wird ein Produktstrom erzeugt. Ein solcher Produktstrom kann im Falle einer Chlor-Alkali-Elektrolyse beispielsweise Chlor und Natronlage oder im Falle einer Wasserelektrolyse Wasserstoff enthalten. Für den Fall, dass die Anlage durch eine Batterie gegeben ist, besteht der Produktstrom schlichtweg in einem elektrischen Strom. In jedem Fall werden die durch die einzelnen Module erzeugten Produktströme zu einem Gesamtstrom zusammengefasst.

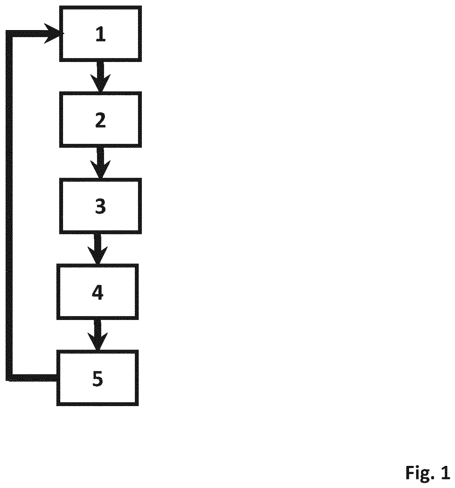

In Fig. 1 sind die essentiellen durch die Steuereinheit durchgeführten Verfahrensschritte schematisch visualisiert. Diese umfassen bei Vorliegen einer Startbedingung:
Das Erfassen eines aktuellen Gesamtproduktstrombedarfs (1). Der aktuelle Gesamtproduktstrombedarf kann stark variieren. Insbesondere bei Batterien sind extrem starke Schwankungen des Gesamtproduktstrombedarfs möglich.

Sobald der Gesamtproduktstrombedarf erfasst ist, wird die Effizienz der Module der elektrochemischen Anlage erfasst (2). Dabei hängt die Effizienz von dem Verhältnis aus jeweiligem Betriebsstrom und Produktstrom ab.

In einem weiteren Schritt werden die Module ermittelt (3), insbesondere welche Module überhaupt zur Verfügung stehen. Optional können auch die einsatzbereiten Module ermittelt werden: Nicht einsatzbereite Module sind beispielsweise defekte oder zu Wartungszwecken außer Betrieb genommene Module. Nicht einsatzbereiten Modulen kann ferner beispielsweise für die Periode des Defekts oder der Wartungstätigkeiten ein fester Betriebsstrom von im Wesentlichen Null zugewiesen werden.

Der folgende erfindungsgemäße Verfahrensschritt betrifft die Ermittlung von modulspezifischen Soll-Betriebsströmen für die Module zur Deckung des aktuellen Gesamtproduktstrombedarfs. Dabei werden die modulspezifischen Soll-Betriebsströme aus einer Spanne zulässiger modulspezifischer Soll-Betriebsströme ermittelt, wodurch beispielsweise verhindert werden kann, dass durch das Wählen eines zu hohen Betriebsstroms Beschädigungen am Modul verursacht werden. Überdies erfolgt die Ermittlung der modulspezifischen Soll-Betriebsströme in Abhängigkeit von der Effizienz der Module und des aktuellen Gesamtproduktstrombedarfs (4). Die Berücksichtigung der Effizienz der Module stellt einen essentiellen Schritt des erfindungsgemäßen Verfahrens dar, da hierdurch das Betreiben der chemischen Anlage nahe des gesamtleistungsaufnahmeminimierten Punktes möglich wird.

Nachdem die modulspezifischen Soll-Betriebsströme ermittelt wurden, werden die Betriebsströme der Module auf die ermittelten modulspezifischen Soll-Betriebsströme eingestellt (5).

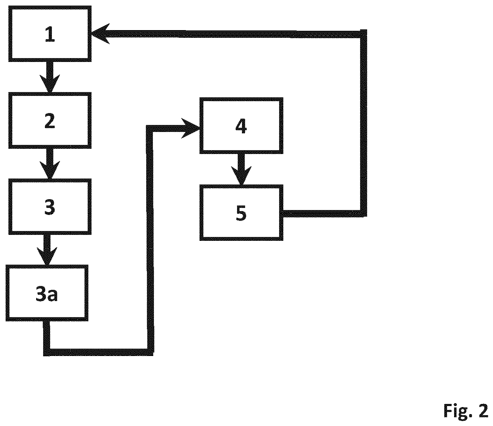

Eine bevorzugte Weiterbildung des erfindungsgemäßen Verfahrens ist in Fig. 2 schematisch abgebildet. Diese Weiterbildung zeichnet sich dadurch aus, dass zum Ermitteln der modulspezifischen Soll-Betriebsströme die jeweiligen Module nach deren aktueller Effizienz sortiert und geordnet angehoben beziehungsweise abgesenkt werden bis der aktuelle Gesamtproduktstrombedarf gedeckt wird (3a). Aus diese Weise kann bei einem steigenden beziehungsweise sinkenden Gesamtproduktstrombedarf die Leistungsaufnahme der Anlage reduziert werden, indem effiziente beziehungsweise ineffiziente Module einen höheren beziehungsweise niedrigeren Betriebsstrom zugewiesen bekommen. Das Sortieren der Module hinsichtlich ihrer Effizienz ist erforderlich, um sie anschließend geordnet anheben beziehungsweise absenken zu können. Da dieses Sortieren einen nicht unerheblichen Rechen- beziehungsweise Zeitaufwand verursachen kann, ist in einer Weiterbildung des erfindungsgemäßen Verfahrens vorgesehen, dass zum Sortieren der n Module hinsichtlich ihrer Effizienz ein Algorithmus, der mit n*log(n) skaliert, mithin auch für großen Anlagen mit vielen Modulen eine überschaubare Rechenzeit benötigt, verwendet wird. Dieser kann beispielsweise der Quicksort-Algorithmus sein.

Erfindungsgemäß werden - ebenfalls entsprechend dem Verfahrensschaubild nach Fig. 2 - im Schritt (3a) zum Ermitteln der modulspezifischen Soll-Betriebsströme die jeweiligen Module nach einem modulspezifischen Lebenszyklus-Parameter sortiert und geordnet angehoben beziehungsweise abgesenkt bis der aktuelle Gesamtproduktstrombedarf gedeckt wird. Dabei wird der Lebenszyklus-Parameter aus der aktuellen Effizienz der Module (M) und einem Instandhaltungskosten der elektrochemischen Anlage berücksichtigenden Korrekturterm berechnet. Vorzugsweise wird der Korrekturterm abhängig von einer während der bisherigen Lebenszeit durch das jeweilige Modul geflossenen Gesamtladungsmenge und/oder abhängig vom Alter des jeweiligen Moduls und/oder abhängig von einer Position des Moduls in der elektrochemischen Anlage bestimmt.

Bevorzugt erfolgt das Ermitteln der modulspezifischen Soll-Betriebsströme (Iₘ) für die einsatzbereiten Module (M) zur Deckung des Gesamtproduktstrombedarfs (B) in den zuvor beschriebenen Verfahren iterativ unter Vorausberechnung der für jedes einzelne Modul (M) erreichbaren Effizienz bei einer angenommenen schrittweisen Veränderung des jeweiligen modulspezifischen Betriebsstroms. Besonders bevorzugt wird für die Iteration Greedy-Algorithmus eingesetzt. Die Iteration erfolgt bevorzugt mit einer adaptiven Schrittweite erfolgt, die abhängig von einer bestehenden Abweichung des Gesamtproduktstroms von dem Gesamtproduktstrombedarf (B) gewählt wird.

Die Effizienz der Module (M) wird beim Ermitteln der modulspezifischen Soll-Betriebsströme (Iₘ) vorzugsweise mit einem Gewichtungsfaktor gewichtet, der von dem Verhältnis des modulspezifischen Betriebsstroms und der Summe der modulspezifischen Betriebsströme aller Module (M) abhängt. Dadurch wird die Auswirkung der Effizienzänderung des einzelnen Moduls auf die Gesamteffizienz bereits bei der Ermittlung der modulspezifischen Soll-Betriebsströme (Iₘ) berücksichtigt.

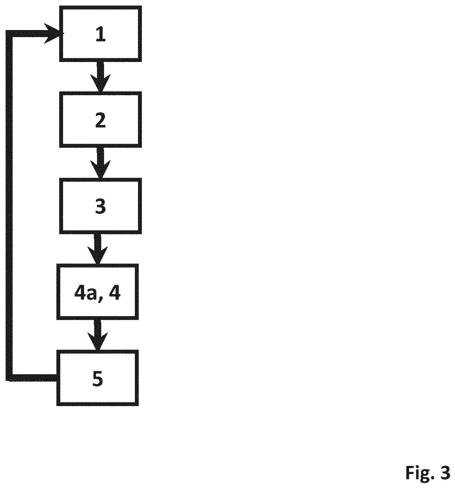

Eine bevorzugte alternative Weiterbildung des erfindungsgemäßen Verfahrens ist in Fig. 3 abgebildet. Bei dieser wird der der ermittelte modulspezifische Soll-Betriebsstrom durch Multiplikation mit einem Gewichtungsfaktor modifiziert, welcher von dem Verhältnis des modulspezifischen Betriebsstroms und der Summe der modulspezifischen Betriebsströme aller Module abhängt (4a). Hierdurch wird der Betriebspunkt der Anlage noch weiter an sein Energieeffizienzoptimum gebracht.

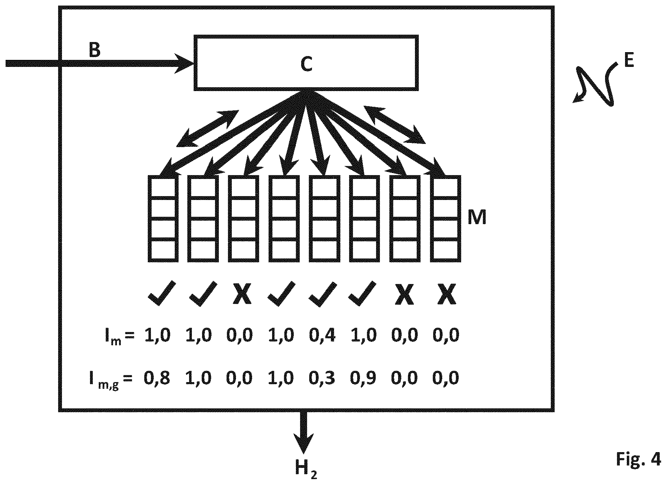

In Fig. 4 ist eine schematische Darstellung des erfindungsgemäßen Verfahrens anhand einer Wasser-Elektrolyse-Anlage (E) wiedergegeben, welche Anlage eine Steuereinheit (C) sowie eine Vielzahl parallel geschalteter Module (M) umfasst, welche Module (M) aus in Reihe geschalteten Elektrolyse-Zellen zur Produktion von Wasserstoff gebildet werden. Die Steuereinheit (C) erfasst dabei den Gesamtproduktstrombedarf (B) und erfasst die Effizienz der einzelnen Module (M), sortiert diese nach deren Effizienz und ermittelt die Einsatzbereitschaft der Module (M) (visualisiert durch Haken oder Kreuz). Anschließend werden die Soll-Betriebsströme der Module (Iₘ) ermittelt, mit einem Gewichtungsfaktor multipliziert, so dass die gewichteten Soll-Betriebsströme der Module (I_{m,g}) erhalten werden, um die gesamte Anlage näher an ihren energieeffizientesten Betriebspunkt zu bringen. Nach der Einstellung der Betriebsströme auf die gewichteten Soll-Betriebsströme (I_{m,g}) kann die Steuereinheit die Anlage auf das Vorliegen einer neuen Startbedingung überwachen.

### Bezugszeichenliste

- 1: Erfassung des aktuellen Gesamtproduktstrombedarfs
- 2: Erfassung der Moduleffizienz
- 3: Ermittlung der Module
- 3a: Sortierung und Variation nach Effizienz / Lebenzyklus-Parameter
- 4a: Multiplikation der modulspezifischen Soll-Betriebsströme mit Gewichtungsfaktor
- 4: Ermittlung der modulspezifischen Soll-Betriebsströme
- 5: Einstellen der modulspezifischen Soll-Betriebsströme

- B: Gesamtproduktstrombedarf
- C: Steuereinheit
- E: Wasser-Elektrolyse-Anlage
- M: Modul
- Iₘ: Soll-Betriebsstrom eines Moduls
- I_{m,g}: Soll-Betriebsstrom eines Moduls nach Gewichtung

## Patentansprüche

1. Verfahren zur bedarfsabhängigen Regelung einer elektrochemischen Anlage, welche Anlage Module (M) und eine Steuereinheit (C) umfasst, wobei jedes Modul (M) durch die Steuereinheit individuell angesteuert und mit einem modulspezifischen elektrischen Betriebsstrom versorgt wird, um mittels der Module (M) jeweils einen Produktstrom zu erzeugen, wobei die Produktströme der einzelnen, bezüglich ihrer Produktströme parallel geschalteten Module (M) zu einem Gesamtproduktstrom der Anlage zusammengeführt werden, wobei bei Vorliegen einer Startbedingung die folgenden Schritte durch die Steuereinheit (C) durchgeführt werden:
- Erfassen eines aktuellen Gesamtproduktstrombedarfs (B) (1)
- Erfassen der aktuellen von dem Verhältnis aus jeweiligem Betriebsstrom und Produktstrom abhängigen Effizienz der Module (M) der elektrochemischen Anlage (2),
- Ermitteln der einsatzbereiten Module (M) (3),
- Ermitteln von modulspezifischen Soll-Betriebsströmen für die einsatzbereiten Module (M) zur Deckung des aktuellen Gesamtproduktstrombedarfs (B) aus einer Spanne zulässiger modulspezifischer Soll-Betriebsströme (Iₘ) in Abhängigkeit von der Effizienz der Module (M) und des aktuellen Gesamtproduktstrombedarfs (B) (4), wobei zum Ermitteln der modulspezifischen Soll-Betriebsströme (Iₘ) die jeweiligen Module (M) nach einem modulspezifischen Lebenszyklus-Parameter sortiert und geordnet angehoben beziehungsweise abgesenkt werden bis der aktuelle Gesamtproduktstrombedarf (B) gedeckt wird (3a),
- Einstellen der Betriebsströme der einsatzbereiten Module (M) auf die ermittelten modulspezifischen Soll-Betriebsströme (Iₘ) (5),
**dadurch gekennzeichnet, dass** der Lebenszyklus-Parameter aus der aktuellen Effizienz der Module und einem Instandhaltungskosten der elektrochemischen Anlage berücksichtigenden Korrekturterm berechnet wird, wobei der Korrekturterm eine Abweichung von dem momentan effizientesten Betriebspunkt der Anlage erzeugt, der eine ungleichmäßige Alterung der Module im Hinblick auf deren Effizienz ermöglicht.

2. Verfahren nach Anspruch 1, **dadurch gekennzeichnet, dass** der Korrekturterm abhängig von einer während der bisherigen Lebenszeit durch das jeweilige Modul geflossenen Gesamtladungsmenge und/oder abhängig vom Alter des jeweiligen Moduls und/oder abhängig von einer Position des Moduls in der elektrochemischen Anlage bestimmt wird.

3. Verfahren nach einem der Ansprüche 1 oder 2, **dadurch gekennzeichnet, dass** das Ermitteln der modulspezifischen Soll-Betriebsströme (Iₘ) für die einsatzbereiten Module (M) zur Deckung des Gesamtproduktstrombedarfs (B) iterativ erfolgt unter Vorausberechnung der für jedes einzelne Modul (M) erreichbaren Effizienz bei einer angenommenen schrittweisen Veränderung des jeweiligen modulspezifischen Betriebsstroms.

4. Verfahren nach Anspruch 3, **dadurch gekennzeichnet, dass** die Iteration auf einem Greedy-Algorithmus beruht.

5. Verfahren nach Anspruch 3 oder 4, **dadurch gekennzeichnet, dass** die Iteration mit einer adaptiven Schrittweite erfolgt, die abhängig von einer bestehenden Abweichung des Gesamtproduktstroms von dem Gesamtproduktstrombedarf (B) gewählt wird.

6. Verfahren nach einem der Ansprüche 1 bis 5, **dadurch gekennzeichnet, dass** die Effizienz der Module (M) beim Ermitteln der modulspezifischen Soll-Betriebsströme mit einem Gewichtungsfaktor gewichtet wird, der von dem Verhältnis des modulspezifischen Betriebsstroms und der Summe der modulspezifischen Betriebsströme aller Module (M) abhängt (4a).

7. Verfahren nach einem der Ansprüche 1 bis 6, **dadurch gekennzeichnet, dass** sämtliche Module durch die Steuereinheit einen zu einer Grundlast korrespondierenden Mindest-Betriebsstrom zugewiesen bekommen.

8. Verfahren nach einem der Ansprüche 1 bis 7, **dadurch gekennzeichnet, dass** das die Steuereinheit eine Anlagenkontrolleinheit ist.

9. Verfahren nach einem der Ansprüche 1 bis 8, **dadurch gekennzeichnet, dass** als eine Startbedingung die Abweichung des aktuell erzeugten Produktstroms um ein vorgebbares Maß von dem Gesamtproduktstrombedarf verwendet wird.

10. Verfahren nach einem der Ansprüche 1 bis 9, **dadurch gekennzeichnet, dass** als eine Startbedingung die In- oder Außerbetriebnahme einzelner Module verwendet wird.

11. Verfahren nach einem der Ansprüche 1 bis 10, **dadurch gekennzeichnet, dass** als eine Startbedingung die Über- oder Unterschreitung der durch die Steuereinheit ermittelte Temperatur der Module um einen vorgebbaren Maximalbetrag verwendet wird.

12. Verfahren nach einem der Ansprüche 1 bis 11, **dadurch gekennzeichnet, dass** die elektrochemische Anlage eine Wasser-Elektrolyse-Anlage ist.

13. Verfahren nach einem der Ansprüche 1 bis 12, **dadurch gekennzeichnet, dass** die Effizienz der einzelnen Module anhand einer Strom-Spannungskennlinie ermittelt wird.

14. Verfahren nach einem der Ansprüche 1 bis 13, **dadurch gekennzeichnet, dass** die Effizienz der einzelnen Module in der Steuereinheit zur Dokumentation der Modulalterung gespeichert wird.

## Claims

1. A method for demand-based closed-loop control of an electrochemical plant, which comprises modules (M) and an control unit (C), each module (M) being individually controlled by the control unit and supplied with a module-specific electric operating current, in order for each of the modules (M) to generate a separate product flow, the product flows of the individual modules (M), which are connected in parallel with regard to their product flows, being merged to form a total product flow of the plant, wherein the following steps are carried out by the control unit (C) when a start condition is satisfied:
- recording a current total product flow demand (B) (1)
- recording the current efficiency of the modules (M) of the electrochemical plant depending on the ratio of the respective operating current and product flow (2),
- determining the operationally ready modules (M) (3),
- determining module-specific target operating currents for the operationally ready modules (M) to cover the current total product flow demand (B) from a range of permissible module-specific target operating currents (Iₘ) as a function of the efficiency of the modules (M) and the current total product flow demand (B) (4), wherein to determine the module-specific target operating currents (Iₘ), the respective modules (M) are sorted according to a module-specific life-cycle parameter and are raised or lowered according to that order until the current total product flow demand (B) is met (3a),
- setting the operating currents of the operationally ready modules (M) to the determined module-specific target operating currents (Iₘ) (5),
**characterized in that,** the life-cycle parameter is calculated from the current efficiency of the modules and a correction term that takes into account maintenance costs of the electrochemical plant, wherein the correction term generates a deviation from the currently most efficient operating point of the plant, which allows non-uniform aging of the modules in terms of their efficiency.

2. The method as claimed in claim 1, **characterized in that** the correction term is determined depending on a total charge quantity that flowed through the respective module during the previous life cycle and/or depending on the age of the respective module and/or depending on the position of the module in the electrochemical plant.

3. The method as claimed in either of claims 1 or 2, **characterized in that** the module-specific target operating currents (Iₘ) for the operationally ready modules (M) to meet the total product flow demand (B) are determined iteratively using a predictive calculation of the efficiency achievable for each individual module (M) and assuming a stepwise change of the respective module-specific operating current.

4. The method as claimed in claim 3, **characterized in that** the iteration is based on a greedy algorithm.

5. The method as claimed in claim 3 or 4, **characterized in that** the iteration is carried out with an adaptive step size, which is selected depending on a current deviation of the total product flow from the total product flow demand (B).

6. The method as claimed in any one of claims 1 to 5, **characterized in that** the efficiency of the modules (M) when determining the module-specific target operating currents is weighted with a weighting factor, which depends on the ratio of the module-specific operating current and the sum of the module-specific operating currents of all modules (M) (4a).

7. The method as claimed in any one of claims 1 to 6, **characterized in that** all modules are assigned a minimum operating current corresponding to a basic load by the control unit.

8. The method as claimed in any one of claims 1 to 7, **characterized in that** the control unit is a plant monitoring unit.

9. The method as claimed in any one of claims 1 to 8, **characterized in that** the deviation of the currently generated product flow from the total product flow demand by a predefinable amount is used as a start condition.

10. The method as claimed in any one of claims 1 to 9, **characterized in that** the commissioning or decommissioning of individual modules is used as a start condition.

11. The method as claimed in any one of claims 1 to 10, **characterized in that** the exceeding or undershooting of the temperature of the modules, determined by the control unit, by a predefinable maximum amount is used as a start condition.

12. The method as claimed in any one of claims 1 to 11, **characterized in that** the electrochemical plant is a water electrolysis plant.

13. The method as claimed in any one of claims 1 to 12, **characterized in that** the efficiency of the individual modules is determined by means of a current-voltage characteristic.

14. The method as claimed in any one of claims 1 to 13, **characterized in that** the efficiency of the individual modules in the control unit is stored as documentation of the module aging.

## Revendications

1. Procédé de commande en boucle fermée d'une installation électrochimique, ladite installation comprenant des modules (M) et une unité de commande (C), dans lequel chaque module (M) est commandé individuellement par l'unité de commande et est alimenté par un courant de service électrique spécifique au module, pour produire respectivement un courant produit à l'aide des modules (M), dans lequel les courants produits des modules (M) individuels sont connectés en parallèle par rapport à leurs courants produits jusqu'à un courant produit total de l'installation, dans lequel en présence d'une condition de démarrage, les étapes suivantes sont réalisées par l'unité de commande (C) :
- détection d'un besoin actuel de courant produit total (B) (1) ;
- détection de l'efficience actuelle des modules (M) de l'installation électrochimique par rapport au courant de service respectif et au courant produit (2) ;
- détermination des modules (M) prêts à être insérés (3) ;
- détermination des courants de service théoriques spécifiques au module pour les modules (M) prêts à être insérés afin de couvrir le besoin actuel de courant produit total (B) à partir d'une tension de courants de service théoriques spécifiques au module (Iₘ) admis en fonction de l'efficience des modules (M) et du besoin actuel de courant produit total (B) (4), dans lequel pour déterminer les courants de service théoriques spécifiques au module (Iₘ), les modules (M) respectifs sont triés en fonction d'un paramètre de cycle de vie spécifique au module et levés et/ou abaissés dans l'ordre jusqu'à ce que le besoin actuel de courant produit total (B) soit couvert (3a) ;
- réglage des courants de service des modules (M) prêts à être insérés pour atteindre les courants de service théoriques spécifiques au module (Iₘ) déterminés (5) ; **caractérisé en ce que** le paramètre de cycle de vie est déterminé à partir de l'efficience actuelle des modules et d'un terme de correction prenant en compte le coût d'entretien de l'installation électrochimique, dans lequel le terme de correction produit un écart par rapport au point de fonctionnement permettant un vieillissement uniforme des modules en terme d'efficience.

2. Procédé selon la revendication 1, **caractérisé en ce que** le terme de correction est défini en fonction d'une quantité de charge totale consommée par le module respectif pendant la durée de vie précédente et/ou en fonction de l'âge du module respectif et/ou en fonction d'une position du module dans l'installation électrochimique.

3. Procédé selon l'une quelconque des revendications 1 ou 2, **caractérisé en ce que** la détermination des courants de service théoriques spécifiques au module (Iₘ) est réalisée itérativement pour les modules (M) prêts à être insérés afin de couvrir le besoin de courant produit total (B) par prévision de l'efficience pouvant être atteinte par chaque module (M) individuel en cas de variation par paliers du courant de service spécifique au module respectif.

4. Procédé selon la revendication 3, **caractérisé en ce que** l'itération repose sur un algorithme de Greedy.

5. Procédé selon la revendication 3 ou 4, **caractérisé en ce que** l'itération est réalisée avec un pas adaptatif sélectionné en fonction d'un écart existant du courant produit total par rapport au besoin de courant produit total (B).

6. Procédé selon l'une quelconque des revendications 1 à 5, **caractérisé en ce que** l'efficience des modules (M) est pondérée lors de la détermination des courants de service théoriques spécifiques au module au moyen d'un facteur de pondération dépendant du rapport du courant de service spécifique au module et de la somme des courants de service spécifiques au module de tous les modules (M) (4a).

7. Procédé selon l'une quelconque des revendications 1 à 6, **caractérisé en ce que** l'ensemble des modules reçoivent de l'unité de commande, de façon orientée, un courant de service minimal correspondant à une charge de base orientée vers une charge de base.

8. Procédé selon l'une quelconque des revendications 1 à 7, **caractérisé en ce que** l'unité de commande est une unité de contrôle d'installation.

9. Procédé selon l'une quelconque des revendications 1 à 8, **caractérisé en ce que** la condition de démarrage utilisée est l'écart déterminé, dans une mesure prédéfinissable, du courant produit actuel par rapport au besoin de courant produit total.

10. Procédé selon l'une quelconque des revendications 1 à 9, **caractérisé en ce qu'**une condition de démarrage utilisée est la mise en service et mise hors service de modules individuels.

11. Procédé selon l'une quelconque des revendications 1 à 10, **caractérisé en ce qu'**une condition de démarrage est le passage au-dessus ou en-dessous d'une température des modules déterminée par l'unité de commande d'une valeur maximale prédéfinissable.

12. Procédé selon l'une quelconque des revendications 1 à 11, **caractérisé en ce que** l'installation électrochimique est une installation d'électrolyse de l'eau.

13. Procédé selon l'une quelconque des revendications 1 à 12, **caractérisé en ce que** l'efficience des modules individuels est déterminée à l'aide d'une courbe de tension de courant.

14. Procédé selon l'une quelconque des revendications 1 à 13, **caractérisé en ce que** l'efficience des modules individuels est mémorisée dans l'unité de commande afin de documenter le vieillissement des modules.
